# EUROPÄISCHE PATENTSCHRIFT

(11) **EP 2 406 110 B1**
(45) Veröffentlichungstag und Bekanntmachung des Hinweises auf die Patenterteilung: **15.05.2013**
(21) Anmeldenummer: 10707223.3
(22) Anmeldetag: 03.03.2010
(51) Int. Cl.: B60R 22/34, B60R 22/40

(54) **GURTAUFROLLER**
SEAT BELT RETRACTOR
ENROULEUR DE SANGLE

(30) Priorität: 11.03.2009 DE 102009012565
(43) Veröffentlichungstag der Anmeldung: 18.01.2012
(73) Patentinhaber: TRW Automotive GmbH, 73553 Alfdorf (DE)
(72) Erfinder: GENTNER, Bernd, 73479 Ellwangen (DE); MOEDINGER, Thomas, 73553 Alfdorf (DE); GROSS, Oliver, 73568 Durlangen (DE); RINK, Juergen, 73550 Waldstetten (DE)
(74) Vertreter: Prehn, Manfred
(86) Internationale Anmeldenummer: PCT/EP2010/001303
(87) Internationale Veröffentlichungsnummer: WO 2010/102744

(56) Entgegenhaltungen:
- EP-A1- 1 619 091
- CN-A- 1 100 043
- DE-A1- 3 809 007
- DE-A1- 4 311 201
- DE-A1- 10 321 729

## Beschreibung

Die Erfindung betrifft einen Gurtaufroller mit einem Rahmen, einer in dem Rahmen drehbar gelagerten Spule und einer an der Gurtspule vorgesehenen Blockierklinke, die in eine Blockierverzahnung eingreifen kann.

Gurtaufroller in Fahrzeugen haben Blockiereinrichtungen, um bei einem Rückhaltefall, beispielsweise bei einem Aufprall oder einer starken Verzögerung des Fahrzeugs, einen Gurtbandauszug zu stoppen und so eine Vorverlagerung des Fahrzeuginsassen zu verhindern. Um bei einem Unfall die Belastung durch das Gurtband auf den Fahrzeuginsassen zu reduzieren, sind Kraftbegrenzungseinrichtungen vorgesehen, die bei ausreichend hohen Auszugskräften einen definierten Gurtbandauszug ermöglichen. Der Auszug des Gurtbandes ist dabei aufgrund des begrenzten Verformungsverhaltens der Kraftbegrenzer begrenzt.

Biespielhafte Ausführungen gemäß dem Oberbegriffs des Anspruchs 1 sind aus DE 103 21799 A1 oder DE 43 11 21 A1 bekannt.

Die Erfindung schafft einen Gurtaufroller, der nach der Blockierung der Gurtspule einen definierten Gurtbandauszug erlaubt und dabei ein möglichst geringes Einbaumaß aufweist.

Erfindungsgemäß ist dafür ein Gurtroller vorgesehen, mit einem Rahmen, einem in dem Rahmen drehbar gelagerten Gurtspule und einer an der Gurtspule vorgesehenen Blockierklinke, die in eine Blockierverzahnung eingreifen kann. Die Blockierverzahnung ist in einem Blockierring vorgesehen, der begrenzt drehbar am Rahmen gelagert ist. Nach der Aktivierung der Blockierklinke wird diese mit dem Blockierring gekoppelt. Da der Blockerring begrenzt drehbar ist, kann nach der Blockierung ein definierter Gurtbandauszug erfolgen, bis die Gurtspule bei Erreichen des Drehbereichsendes endgültig gestoppt wird. Durch eine entsprechende Auswahl des Drehbereichs kann der Gurtbandauszug beliebig variiert werden.

Um den Gurtaufroller möglichst kompakt zu gestalten, ist die Blockierverzahnung vorzugsweise auf der Innenseite des Blockierrings vorgesehen, und die Blockierklinke kann radial nach außen in die Blockierverzahnung eingreifen.

Das Gewinde kann beispielsweise ein Außengewinde sein, das in ein passendes Innengewinde am Rahmen des Gurtaufrollers eingreift. Der Blockierring kann so beispielsweise in eine entsprechend dimensionierte Öffnung des Rahmens eingeschraubt werden, wodurch dieser zudem sicher am Rahmen gelagert ist.

Um die Gurtspule nach einer definierten Drehung zu stoppen und somit den Gurtbandauszug auf eine definierte Länge zu limitieren, ist vorzugsweise am oder im Gewinde ein Anschlag vorgesehen, der die Drehung des Blockierrings stoppen kann, sodass kein zusätzlicher Stoppmechanismus erforderlich ist. Bei einer Drehung der Gurtspule wird das Gewinde des Blockierrings soweit in das passende Gegengewinde eingedreht, bis der Blockierring an dem Anschlag anliegt.

Der Anschlag kann beispielsweise eine sich radial erstreckende Anschlagfläche sein. Diese kann vorzugsweise am Ende des Gewindes sein, sodass der Blockierring beim Eindrehen in das Gegengewinde gegen diese geführt wird.

Der Anschlag kann aber auch ein axial vorstehender Anschlag sein, gegen den eine entsprechende Gegenfläche des Blockierrings oder des Rahmens geführt wird. Der Anschlag kann an einem rahmenfesten Bauteil oder am Blockierring vorgesehen sein.

In einer bevorzugten Ausführungsform ist ein Haltering am Rahmen vorgesehen, und der Blockierring ist an oder in diesem Haltering angebracht, wobei der Haltering das Gegengewinde aufweist. Durch den Austausch des Halterings bzw. die entsprechende Auswahl eines Halterings ist so auf einfache Art eine Anpassung des Gurtaufrollers möglich, beispielsweise an eine bestimmte Gurtbandauszugslänge.

Zwischen Blockierring und Haltering kann eine lösbare Haltevorrichtung vorgesehen sein. Eine solche lösbare Haltevorrichtung kann den Blockierring und den Haltering gegeneinander fixieren, sodass beispielsweise erst ab einer bestimmten Kraft eine Verdrehung des Blockierrings zum Haltering und somit ein Gurtbandauszug erfolgen kann.

Bei einer Ausführungsform ohne Haltering lässt sich die lösbare Haltevorrichtung aber auch zwischen dem Blockierring und dem Rahmen anordnen.

Vorzugsweise ist die Haltevorrichtung durch einen Stift, insbesondere einen Scherstift gebildet. Der Scherstift hat eine Sollbruchstelle, die bei einer definierten Kraft bricht oder abgeschert wird, sodass der Blockierring gegen den Haltering bzw. gegen den Rahmen verdreht werden kann. Dadurch ist sichergestellt, dass bei geringen Auszugskräften kein Gurtbandauszug erfolgt, aber bei entsprechend größeren Auszugskräften, wie sie beispielsweise bei starken Verzögerungen auftreten, ein Gurtbandauszug erfolgen kann. Die lösbare Haltevorrichtung lässt sich so auf einfache Art herstellen. Es ist kein aufwändiger Steuermechanismus notwendig.

Um den Gurtbandauszug zu bremsen, kann beispielsweise funktional zwischen Blockierring und Haltering ein erster Kraftbegrenzer vorgesehen sein. Bei einer Verdrehung des Blockierrings gegen den Haltering nimmt dieser die bei einem Gurtbandauszug auftretende Energie auf und bremst so den Gurtbandauszug ab.

Der Kraftbegrenzer kann beispielsweise permanent geschaltet sein, sodass keine zusätzliche Steuerung notwendig ist. Der Gurtaufroller erlaubt durch die besondere Bauart eine sehr flexible Gestaltung des Drehbereichs der Spule und somit des Gurtbandauszugs, der von einer sehr kleinen Drehung bis zu mehreren Umdrehungen der Gurtspule reichen kann.

Der Kraftbegrenzer kann aber auch zuschaltbar sein, sodass dieser in einem Normalzustand von dem Blockierring und/oder dem Haltering entkoppelt ist und erst bei einer Blockierung der Gurtspule, beispielsweise bei einem Unfall, mit dem Blockierring und dem Haltering gekoppelt wird. Die Zuschaltung bzw. Abschaltung kann beispielsweise weggesteuert erfolgen, so dass eine Aktivierung bzw. eine Deaktivierung des Kraftbegrenzers nach einem definierten Gurtbandauszug erfolgt.

Es ist auch möglich, dass funktional zwischen Gurtspule und Rahmen ein zweiter Kraftbegrenzer vorgesehen ist. Dieser zweite Kraftbegrenzer kann vollständig separat vom Blockierring und/oder dem Haltering angeordnet sein, sodass er diese nicht beeinflusst. Der zweite Kraftbegrenzer kann ein herkömmlicher Kraftbegrenzer sein, beispielsweise ein innerhalb der Spule angeordneter Torsionsstab.

Auch dieser zweite Kraftbegrenzer kann permanent geschaltet sein oder zuschaltbar sein.

Um den zweiten Kraftbegrenzer zuschalten zu können, ist beispielsweise ein Sperrrad mit einer Sperrverzahnung vorgesehen. Dieses Sperrrad kann mit dem zweiten Kraftbegrenzer gekoppelt werden. Eine rahmenfeste Blockierklinke kann in die Sperrverzahnung des Sperrrads eingreifen und das Sperrrad so drehfest am Rahmen blockieren. Der zweite Kraftbegrenzer ist so vollständig unabhängig vom Blockierring und/oder dem Haltering und beeinflusst in nicht aktiviertem Zustand nicht den Blockierring bzw. den Haltering.

Vorzugsweise weist der zweite Kraftbegrenzer eine Steuereinrichtung auf, die die Blockierklinke ansteuert.

Die Steuereinrichtung kann beispielsweise mit dem Blockierring gekoppelt sein und bei einer Drehung des Blockierrings den zweiten Kraftbegrenzer zuschalten. Die Zuschaltung des zweiten Kraftbegrenzers erfolgt so erst bei einer Verdrehung des Blockierrings gegen den Rahmen bzw. den Haltering. Die Steuerung des zweiten Kraftbegrenzers kann so beispielsweise mechanisch erfolgen, sodass keine elektronische Steuerung notwendig ist.

Der erste Kraftbegrenzer und/oder der zweite Kraftbegrenzer können verschiedene bekannte Kraftbegrenzer aufweisen.

So kann der erste Kraftbegrenzer und/oder der zweite Kraftbegrenzer ein verformbares Element aufweisen, das unter Energieaufnahme verformt wird und so die Gurtspule bremst.

Das verformbare Element kann beispielsweise ein Torsionsstab sein. Dieser kann innerhalb der Gurtspule angeordnet sein, sodass ein platzsparender Aufbau des Gurtaufrollers möglich ist.

Der erste und/oder der zweite Kraftbegrenzer können aber auch beispielsweise einen Draht sowie ein Umformelement aufweisen, das den Draht verformen kann. Dadurch ist auch eine Kraftbegrenzung über einen längeren Gurtbandauszug möglich, beispielsweise über mehrere Umdrehungen der Gurtspule.

Das Umformelement weist dazu beispielsweise eine Schikane auf, durch die der Draht gezogen werden kann. Der Draht wird durch die Schikane abwechselnd umgebogen, sodass durch die auftretende Reibung und bei größeren Verformungen durch die Verformungsarbeit eine Widerstandskraft bereitgestellt ist.

Es ist aber auch denkbar, das der erste Kraftbegrenzer und/oder der zweite Kraftbegrenzer einen zerspanenden Kraftbegrenzer aufweisen, wodurch beispielsweise eine bessere Anpassung der Kennlinie möglich ist.

Der erste Kraftbegrenzer und/oder der zweite Kraftbegrenzer können aber auch einen elektromagnetischen Kraftbegrenzer aufweisen.

Es kann auch ein hydraulischer, insbesondere ein hydrodynamischer Kraftbegrenzer eingesetzt werden.

Weitere Vorteile und Merkmale ergeben sich aus der nachfolgenden Beschreibung in Verbindung mit den beigefügten Zeichnungen. In diesen zeigen:
- Figur 1 eine perspektivische Ansicht eines erfindungsgemäßen Gurtaufrollers,
- Figur 2 den Gurtaufrollers aus Figur 1 in einer Detailansicht,
- Figur 3 eine zweite Detailansicht des Gurtaufrollers aus Figur 1,
- Figur 4 den Gurtaufrollers aus Figur 1 in einer zweiten Detailansicht,
- Figur 5 eine Detailansicht des Gurtaufrollers aus Figur 4,
- Figur 6 eine zweite Ausführungsform eines erfindungsgemäßen Gurtaufrollers,
- Figur 7 eine Detailansicht des Gurtaufrollers aus Figur 6,
- Figur 8 eine dritte Ausführungsform eines erfindungsgemäßen Gurtaufrollers,
- Figur 9 eine Detailansicht des Gurtaufrollers aus Figur 8,
- Figur 10 eine vierte Ausführungsform eines erfindungsgemäßen Gurtaufrollers,
- Figur 11 eine Detailansicht des Gurtaufrollers aus Figur 10,
- Figur 12 eine fünfte Ausführungsform eines erfindungsgemäßen Gurtaufrollers,
- Figur 13 eine Detailansicht des Gurtaufrollers aus Figur 12,
- Figur 14 eine sechste Ausführungsform des erfindungsgemäßen Gurtaufrollers,
- Figur 15 eine Detailansicht des Gurtaufrollers aus Figur 14, und
- Figur 16 eine siebte Ausführungsform des erfindungsgemäßen Gurtaufrollers.

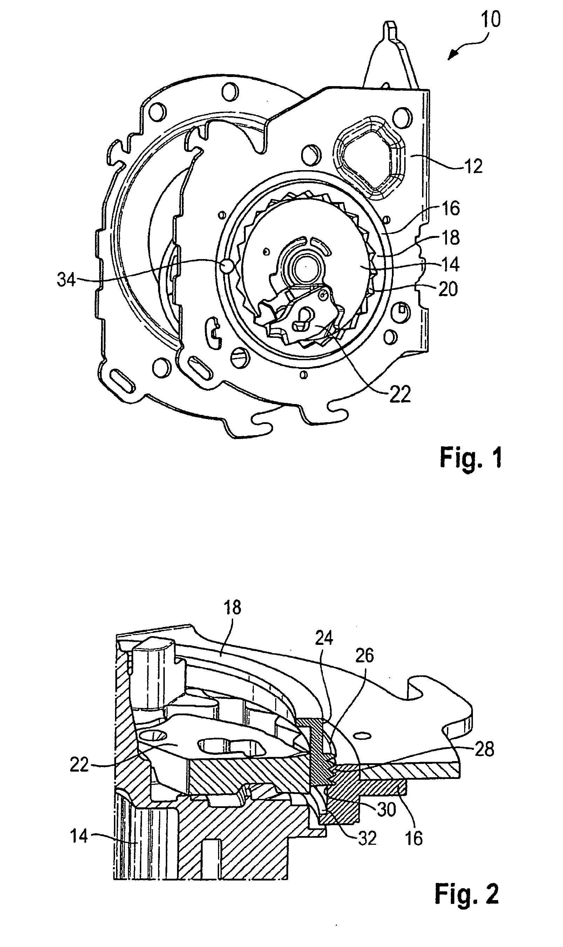

Der in Figur 1 gezeigte Gurtaufroller 10 hat einen Rahmen 12, in dem eine Gurtspule 14 drehbar gelagert ist. Am Rahmen 12 ist ein drehfest mit diesem verbundener Haltering 16 sowie ein drehbar in dem Haltering 16 gelagerten Blockierring 18 vorgesehen. Der Blockierring 18 hat auf seiner Innenseite eine Blockierverzahnung 20, in die eine Blockierklinke 22, die an der Gurtspule 14 gehalten ist, eingreifen kann.

Wie in Figur 2 zu sehen ist, hat der Blockierring 18 auf seiner radialen Außenseite 24 ein Gewinde 26, das als Außengewinde ausgeführt ist und mit dem der Blockierring 18 begrenzt drehbar in einem passenden Gegengewinde 28, das auf der Innenseite 30 des Halterings 16 ausgebildet ist, gelagert ist. Am Haltering 16 ist ein Anschlag 32 ausgebildet, der eine Drehung des Blockierrings 18 gegen den Haltering 16 stoppt.

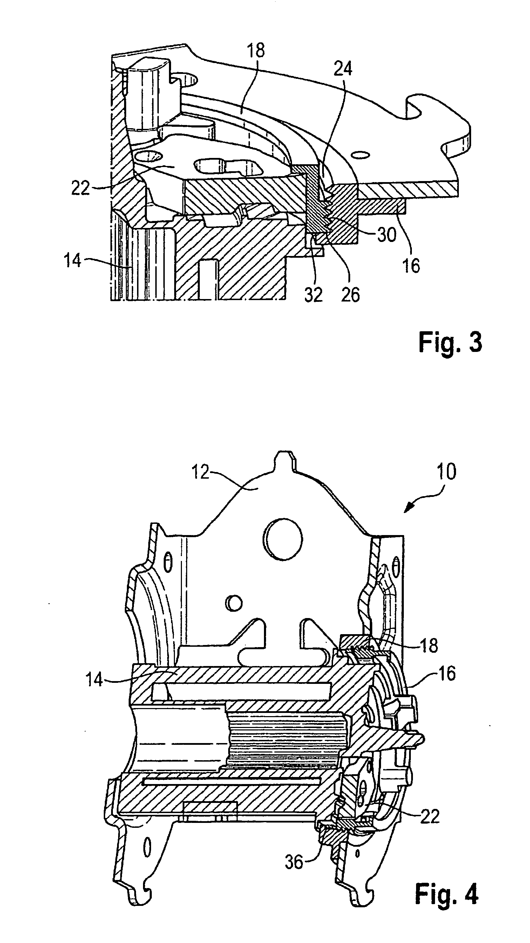

Die Blockierklinke 22 greift radial nach außen in die Blockierverzahnung 20 ein, sodass die Gurtspule 14 drehfest mit dem Blockierring 18 verbunden ist. Ist die Gurtspule 14 so drehfest mit dem Blockierring 18 verbunden, erfolgt beim Auszug eines Gurtbandes eine Verdrehung des Blockierrings 18 gegen den Haltering 16 bzw. den Rahmen 12. Der Blockierring 18 wird so lange gegen den Haltering 16 verdreht, bis der Blockierring 18 am Anschlag 32 des Halterings 16 anliegt (siehe Figur 3). Der Drehbereich der Gurtspule 14 und somit die mögliche Gurtbandauszugslänge kann beispielsweise durch den Abstand des Blockierrings 18 zum Anschlag 32 oder durch die Steigung des Gewindes 26 vorgegeben werden.

In Figur 1 ist zwischen Haltering 16 und Blockierring 18 eine hier nur schematisch dargestellte lösbare Haltevorrichtung 34 vorgesehen. Diese lösbare Haltevorrichtung 34 kann beispielsweise einen Scherstift aufweisen, der erst bei einer definierten Kraft bricht oder abgeschert wird, sodass eine Verdrehung des Blockierrings 18 gegen den Haltering 16 bzw. den Rahmen 12 erst bei einer definierten Auszugskraft erfolgt. Bei geringen Auszugskräften wird die Verdrehung des Blockierrings 18 gegen den Haltering 16 so verhindert.

Die lösbare Haltevorrichtung 34 kann aber auch auf eine andere gebildet sein. Es ist auch denkbar, dass eine Steuerung vorgesehen ist, die die lösbare Haltevorrichtung 34 steuert. Die lösbare Haltevorrichtung 34 kann auch direkt zwischen dem Rahmen 12 und dem Blockierring 18 angeordnet sein.

Der Blockierring 18 kann auch ohne Haltering 16 direkt am Rahmen 12 gehalten sein. Der Blockierring 18 muss auch nicht mit einem Gewinde 26 am Haltering 16 bzw. im Rahmen 12 gehalten sein. Der Blockierring 18 kann auch auf jede andere Art drehbar am Rahmen 12 bzw. dem Haltering 16 gehalten sein. Es ist auch kein Anschlag 32 notwendig. Die Drehung des Blockierrings 18 gegen den Rahmen 12 kann auch auf jede andere Art begrenzt werden. Insbesondere muss der Anschlag 32 keine radial erstreckende Anschlagfläche sein. Es ist beispielsweise auch denkbar, dass der Anschlag axial vorsteht.

Die Blockierverzahnung 20 muss auch nicht auf der Innenseite des Blockierrings 18 angeordnet sein. Ebenso kann die Blockierklinke 22 auf jede andere Art ausgebildet sein. Insbesondere muss diese nicht so ausgebildet sein, dass sie radial nach außen in die Blockierverzahnung 20 eingreifen kann.

Um die Verdrehung der Gurtspule 14 gegen den Rahmen 12 bzw. den Haltering 16 zu verlangsamen bzw. abzubremsen, kann funktional zwischen Blockierring 18 und Rahmen 12 bzw. Haltering 16 ein erster Kraftbegrenzer angeordnet sein. Dieser erste Kraftbegrenzer kann beispielsweise permanent geschaltet sein, sodass konstant eine Kraftbegrenzung erfolgt, sobald der Blockierring 18 durch die Blockierklinke 22 mit dem Haltering 16 bzw. dem Rahmen 12 gekoppelt ist. Der erste Kraftbegrenzer kann aber auch nachträglich zuschaltbar ausgebildet sein.

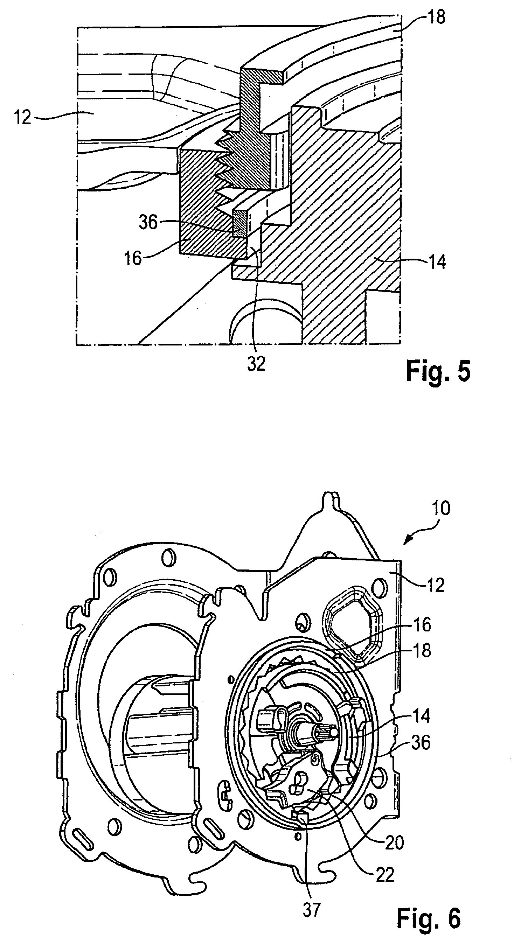

Eine erste Ausführungsform eines solchen Kraftbegrenzers ist in Figur 4 bzw. Figur 5 zu sehen. Der Kraftbegrenzer ist hier durch ein verformbares Element 36 gebildet, das in der hier gezeigten Ausführungsform ringförmig ausgebildet und am Anschlag 34 des Halterings 16 angeordnet ist. Bei einer Verdrehung des Blockierrings 18 gegen den Haltering 16 bewegt sich der Blockierring 18 gegen das verformbare Element 36 und staucht dieses. Durch die Stauchung und Energieaufnahme des verformbaren Elements 36 wird eine Widerstandskraft bereitgestellt, sodass die Gurtspule 14 und somit der Gurtbandauszug gebremst wird.

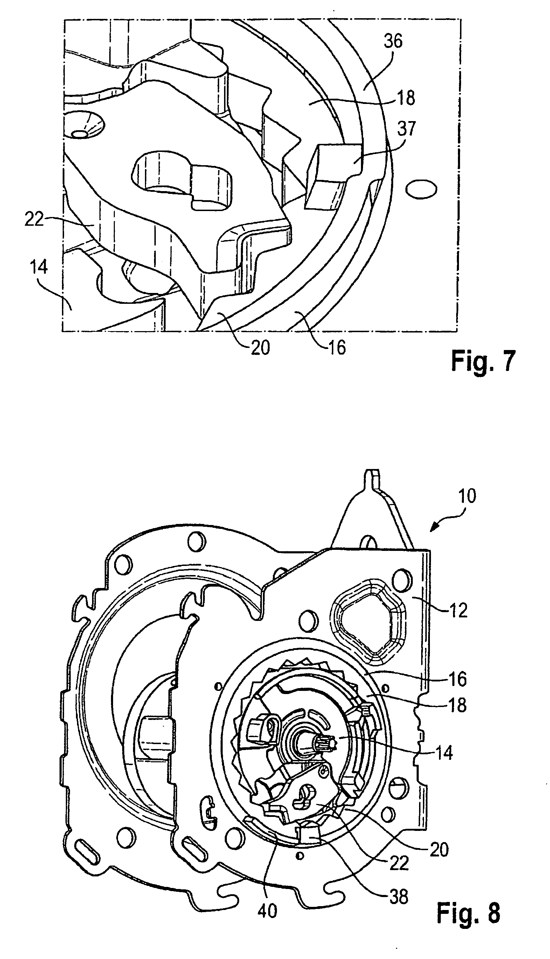

Das verformbare Element 36 kann aber auch ein radialer Steg sein, der durch einen Vorsprung 37 verformt wird (Figuren 6 und 7). Der Vorsprung 37 ist hier am Blockierring 18 angeordnet und drückt das am Haltering 16 angeordnete verformbare Element 36 radial nach außen.

Das verformbare Element 36 kann aber auch auf beliebige andere Art ausgeführt sein. Beispielsweise kann das verformbare Element 36 auch ein Torsionsstab sein, der funktional zwischen Blockierring 18 und Haltering 16 angeordnet ist.

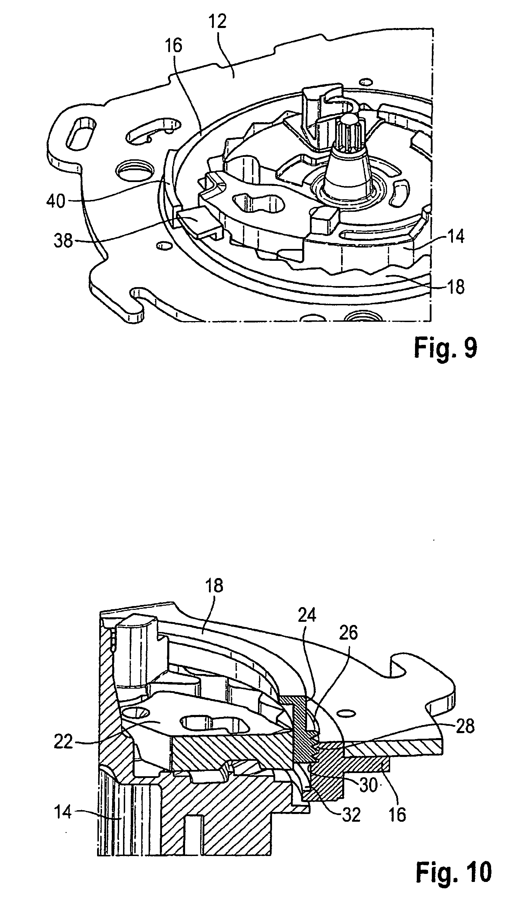

Die Kraftbegrenzung des ersten Kraftbegrenzers kann aber auch durch Schneiden oder Spanen erfolgen. So ist beispielsweise in der in Figur 8 bzw. Figur 9 gezeigten Ausführungsform ein Schneideinsatz 38 angeordnet. Der Schneideinsatz 38 ist hier am Blockierring 18 gehalten und zerspant einen ringförmigen Steg 40, der hier am Haltering 16 vorgesehen ist. Der Schneideinsatz könnte aber auch am Haltering 16 bzw. am Rahmen 12 gehalten sein. Ebenso kann der Steg 40 beliebig ausgebildet sein. Durch das Gewinde 26 wird der Abstand zwischen Blockierring 18 und Haltering 16 bei einer Verdrehung der Gurtspule kontinuierlich verkürzt, sodass bei einer axialen Anordnung des Schneideinsatzes 38 auch ein Zerspannen über mehrere Umdrehungen der Gurtspule 14 möglich ist.

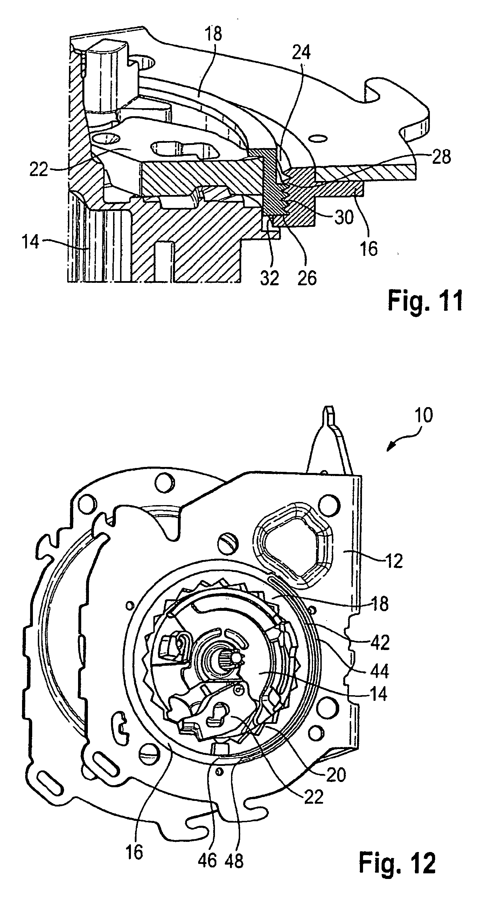

Die Energieaufnahme kann aber auch durch ein selbstschneidendes Gewinde realisiert werden, wie in Figur 10 bzw. Figur 11 zu sehen ist. Das am Haltering 16 ausgebildete Gegengewinde 28 ist hier nur teilweise ausgebildet, sodass das Gewinde 26 des Blockierrings 18 bei einer Verdrehung des Blockierrings 18 gegen den Haltering 16 unter Energieaufnahme ein Gewinde in den Haltering 16 einschneidet, wodurch eine Widerstandskraft bereitgestellt ist.

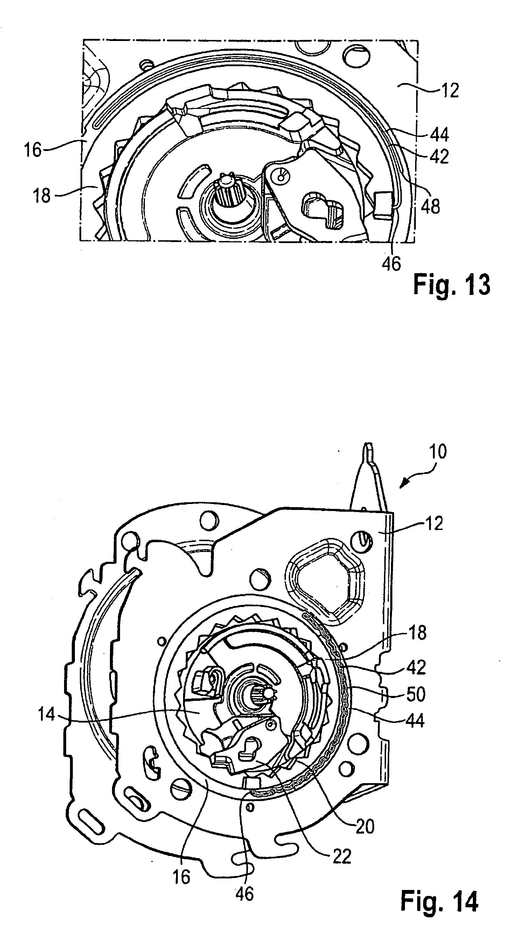

Der erste Kraftbegrenzer kann aber auch einen Draht 42 aufweisen, der durch ein Umformelement 44 verformt wird. In der in Figur 12 und Figur 13 gezeigten Ausführungsform ist der Draht 42 mit einem Ende 46 am Blockierring 18 gehalten und mit einem anderen Ende 48 am Haltering 16. Der Draht 42 ist hier doppellagig in einer zwischen Haltering 16 und Blockierring 18 gebildeten Rinne angeordnet, die hier das Umformelement 44 bildet. Bei einer Verdrehung des Blockierrings 18 gegen den Haltering 16 wird der Draht 42 ausgezogen und dabei am jeweiligen Scheitelpunkt umgebogen. Dadurch erfolgt eine Kraftbegrenzung, bis der Draht 42 vollständig gestreckt ist. Der Drehbereich der Gurtspule 14 kann hier durch einen Anschlag begrenzt werden, beispielsweise um ein vollständiges Strecken des Drahtes 42 zu verhindern.

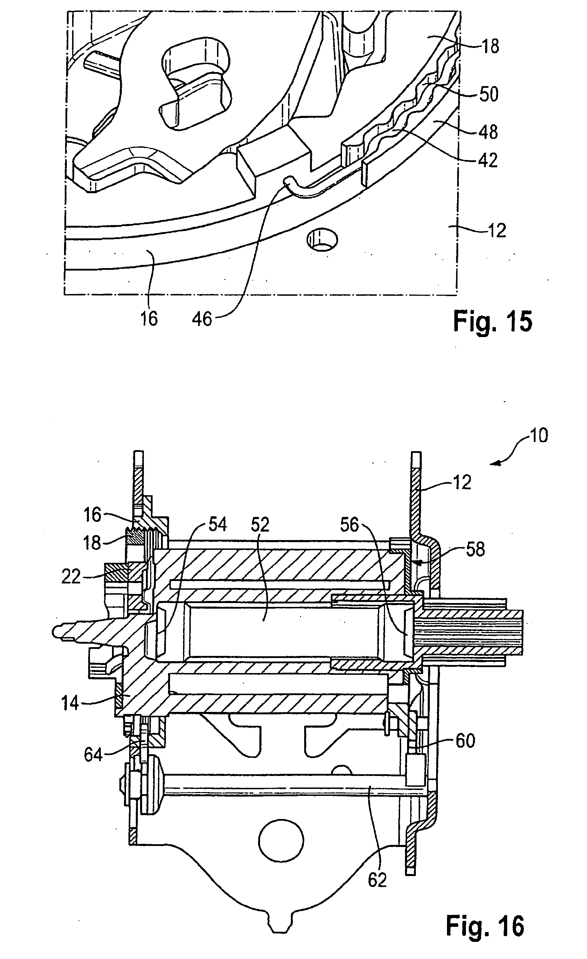

Der Draht 42 kann aber auch nur einlagig ausgebildet sein und ausschließlich am Blockierring 18 gehalten sein (Figuren 14 und 15). Das Umformelement 44 hat in dieser Ausführungsform eine Schikane 50, die den Draht 42 bei einem Auszug abwechselnd in beide Richtungen verformt.

Abweichend von den bisher gezeigten Ausführungsformen kann auch ein zweiter Kraftbegrenzer direkt zwischen Gurtspule 14 und Rahmen 12 angeordnet sein. Dieser zweite Kraftbegrenzer kann parallel zum ersten Kraftbegrenzer angeordnet sein, es kann aber auch ausschließlich der zweite Kraftbegrenzer zwischen Gurtspule 14 und Rahmen 12 vorhanden sein.

In der in Figur 16 gezeigten Ausführungsform hat der zweite Kraftbegrenzer einen Torsionsstab 52, der mit einem bezüglich Figur 16 linken Ende 54 drehfest an der Gurtspule 14 befestigt ist und mit seinem rechten Ende 56 drehfest an einem Sperrrad 58 gehalten ist. Das Sperrrad 58 kann durch eine rahmenfest montierte Sperrklinke 60, die in eine Sperrverzahnung 59 auf der Innenseite des Sperrrades 58 eingreift, drehfest am Rahmen 12 fixiert werden.

Die Sperrklinke 60 wird hier durch eine Aktorstange 62 bedient, die über ein Stellglied 64 mit dem Blockierring 18 gekoppelt ist. Bei einer Drehung des Blockierrings 18 wird das Stellglied 64 bewegt, sodass die Aktorstange 62 die Sperrklinke 60 bedient und den zweiten Kraftbegrenzer aktiviert. Die Aktivierung des zweiten Kraftbegrenzers erfolgt so automatisch bei einer Verdrehung des Blockierrings 18 gegen den Haltering 16 bzw. den Rahmen 12. Eine elektronische Steuerung ist in diesem Fall nicht notwendig.

Die Steuerung des zweiten Kraftbegrenzers kann aber ebenso wie eine Zuschaltung des ersten Kraftbegrenzers auch auf beliebige andere Art erfolgen. Es ist auch denkbar, dass eine elektronische Steuerung vorgesehen ist, die den ersten und/oder den zweiten Kraftbegrenzer schaltet.

Ebenso kann der erste und/oder der zweite Kraftbegrenzer auch durch ein anderes bekanntes Kraftbegrenzungselement gebildet sein. Beispielsweise kann die Kraftbegrenzung auch elektromagnetisch bzw. hydraulisch erfolgen.

## Patentansprüche

1. Gurtaufroller (10) mit einem Rahmen (12), einer in dem Rahmen (12) drehbar gelagerten Gurtspule (14) und einer an der Gurtspule (14) vorgesehenen Blockierklinke (22), die in eine Blockierverzahnung (20) eingreifen kann, wobei die Blockierverzahnung (20) an einem Blockierring (18) vorgesehen ist, der begrenzt drehbar am Rahmen (12) angebracht ist, **dadurch gekennzeichnet, dass** der Blockierring (18) ein Gewinde (26) aufweist und mit diesem Gewinde (26) an einem am Rahmen (12) vorgesehenen Gegengewinde (28) befestigt ist.

2. Gurtaufroller nach Anspruch 1, **dadurch gekennzeichnet, dass** die Blockierverzahnung (20) auf einer Innenseite (32) des Blockierrings (18) vorgesehen ist und die Blockierklinke (22) radial nach außen in die Blockierverzahnung (20) eingreifen kann.

3. Gurtaufroller nach Anspruch 2, **dadurch gekennzeichnet, dass** das Gewinde (26) ein Außengewinde ist.

4. Gurtaufroller nach einem der Ansprüche 2 oder 3, **dadurch gekennzeichnet, dass** am oder im Gewinde (26) ein Anschlag (34) vorgesehen ist, der die Drehung des Blockierrings (18) stoppen kann.

5. Gurtaufroller nach Anspruch 4, **dadurch gekennzeichnet, dass** der Anschlag (34) eine sich radial erstreckende Anschlagfläche ist.

6. Gurtaufroller nach Anspruch 4, **dadurch gekennzeichnet, dass** der Anschlag (34) ein axial vorstehender Anschlag ist.

7. Gurtaufroller nach einem der vorhergehenden Ansprüche, **dadurch gekennzeichnet, dass** ein Haltering (16) am Rahmen (12) vorgesehen ist und der Blockierring (18) an oder in diesem Haltering (16) angebracht ist, wobei der Haltering (16) das Gegengewinde (28) aufweist.

8. Gurtaufroller nach Anspruch 7, **dadurch gekennzeichnet, dass** eine lösbare Haltevorrichtung (33) zwischen Blockierring (18) und Haltering (16) vorgesehen ist.

9. Gurtaufroller nach einem der vorhergehenden Ansprüche, **dadurch gekennzeichnet, dass** eine lösbare Haltevorrichtung (33) zwischen Blockierring (18) und Rahmen (12) vorgesehen ist.

10. Gurtaufroller nach Anspruch 8 oder 9, **dadurch gekennzeichnet, dass** die lösbare Haltevorrichtung (33) durch einen Stift, insbesondere einen Scherstift gebildet ist.

11. Gurtaufroller nach einem der Ansprüche 8 und 10, **dadurch gekennzeichnet, dass** funktional zwischen Blockierring (18) und Haltering (16) ein erster Kraftbegrenzer vorgesehen ist.

12. Gurtaufroller nach Anspruch 11, **dadurch gekennzeichnet, dass** der erste Kraftbegrenzer permanent geschaltet ist.

13. Gurtaufroller nach Anspruch 11, **dadurch gekennzeichnet, dass** der erste Kraftbegrenzer zuschaltbar ist.

14. Gurtaufroller nach einem der vorhergehenden Ansprüche, **dadurch gekennzeichnet, dass** funktional zwischen Gurtspule (14) und Rahmen (12) ein zweiter Kraftbegrenzer vorgesehen ist.

15. Gurtaufroller nach Anspruch 14, **dadurch gekennzeichnet, dass** der zweite Kraftbegrenzer permanent geschaltet ist.

16. Gurtaufroller nach Anspruch 15, **dadurch gekennzeichnet, dass** der zweite Kraftbegrenzer zuschaltbar ist.

17. Gurtaufroller nach Anspruch 16, **dadurch gekennzeichnet, dass** ein Sperrrad (58) einer Sperrverzahnung (59) vorgesehen ist, das mit dem zweiten Kraftbegrenzer gekoppelt werden kann, wobei eine rahmenfeste Sperrklinke (60) in die Sperrverzahnung (59) eingreifen kann und das Sperrrad (58) drehfest am Rahmen (12) blockieren kann.

18. Gurtaufroller nach Anspruch 17, **dadurch gekennzeichnet, dass** der zweite Kraftbegrenzer eine Steuereinrichtung aufweist, die die Sperrklinke (60) ansteuert.

19. Gurtaufroller nach Anspruch 18, **dadurch gekennzeichnet, dass** die Steuereinrichtung mit dem Blockierung (18) gekoppelt ist und bei einer Drehung des Blocklerrings (18) den zweiten Kraftbegrenzer zuschaltet.

20. Gurtaufroller nach einem der Ansprüche 11 bis 19, **dadurch gekennzeichnet, dass** der erste Kraftbegrenzer und/oder der zweite Kraftbegrenzer ein verformbares Element (36) aufweisen.

21. Gurtaufroller nach Anspruch 20, **dadurch gekennzeichnet, dass** das verformbare Element (36) ein Torsionsstab (52) ist.

22. Gurtaufroller nach einem der Ansprüche 11 bis 21, dadurch gekenneichnet, dass der erste Kraftbegrenzer und/oder der zweite Kraftbegrenzer einen Draht (42) sowie ein Umformelement (44) aufweisen, das den Draht (42) verformen kann.

23. Gurtaufroller nach Anspruch 22, **dadurch gekennzeichnet, dass** das Umformelement (44) eine Schikane (50) aufweist, durch die der Draht (42) gezogen werden kann.

24. Gurtaufroller nach einem der Ansprüche 11 bis 23, **dadurch gekennzeichnet, dass** der erste Kraftbegrenzer und/oder der zweite Kraftbegrenzer einen zerspanenden Kraftbegrenzer (38) aufweisen.

25. Gurtaufroller nach einem der Ansprüche 11 bis 24, **dadurch gekennzeichnet, dass** der erste Kraftbegrenzer und/oder der zweite Kraftbegrenzer einen elektromagnetischen Kraftbegrenzer aufweisen.

26. Gurtanfroller nach einem der Ansprüche 12 bis 25, **dadurch gekennzeichnet, dass** der erste Kraftbegrenzer und/oder der zweite Kraftbegrenzer einen hydraulischen, insbesondere einen hydrodynamischen Kraftbegrenzer aufweisen.

## Claims

1. A seat belt retractor (10) comprising a frame (12), a belt reel (14) pivoted in the frame (12) and a blocking pawl (22) provided at the belt reel (14) which is capable of engaging in a blocking teeth system (20), wherein the blocking teeth system (20) is provided at a blocking ring (18) which is attached to the frame (12) in a rotationally limited manner, **characterized in that** the blocking ring (18) includes a thread (26) and is attached by said thread (26) to a mating thread (28) provided at the frame (12).

2. The seat belt retractor according to claim 1, **characterized in that** the blocking teeth system (20) is provided at an inside (32) of the blocking ring (18) and the blocking pawl (22) is capable of engaging radially outwardly in the blocking teeth system (20).

3. The seat belt retractor according to claim 2, **characterized in that** the thread (26) is a male thread.

4. The seat belt retractor according to any one of the claims 2 or 3, **characterized in that** a stop (34) capable of stopping the rotation of the blocking ring (18) is provided at or in the thread (26).

5. The seat belt retractor according to claim 4, **characterized in that** the stop (34) is a radially extending stop face.

6. The seat belt retractor according to claim 4, **characterized in that** the stop (34) is an axially projecting stop.

7. The seat belt retractor according to any one of the preceding claims, **characterized in that** a holding ring (16) is provided at the frame (12) and the blocking ring (18) is mounted at or in said holding ring (16), wherein the holding ring (16) includes the mating thread (28).

8. The seat belt retractor according to claim 7, **characterized in that** a detachable holding device (33) is provided between the blocking ring (18) and the holding ring (16).

9. The seat belt retractor according to any one of the preceding claims, **characterized in that** a detachable holding device (33) is provided between the blocking ring (18) and the frame (12).

10. The seat belt retractor according to claim 8 or 9, **characterized in that** the detachable holding device (33) is formed by a pin, especially a shear pin.

11. The seat belt retractor according to any one of the claims 8 and 10, **characterized in that** a first force limiter is functionally provided between the blocking ring (18) and the holding ring (16).

12. The seat belt retractor according to claim 11, **characterized in that** the first force limiter is permanently connected.

13. The seat belt retractor according to claim 11, **characterized in that** the first force limiter is selectable.

14. The seat belt retractor according to any one of the preceding claims, **characterized in that** a second force limiter is functionally provided between the belt reel (14) and the frame (12).

15. The seat belt retractor according to claim 14, **characterized in that** the second force limiter is permanently connected.

16. The seat belt retractor according to claim 15, **characterized in that** the second force limiter is selectable.

17. The seat belt retractor according to claim 16, **characterized in that** a lock wheel (58) of a locking teeth system (59) is provided which is adapted to be coupled to the second force limiter, wherein a pawl (60) fixed to the frame is capable of engaging in the locking teeth system (59) and is capable of blocking the lock wheel (58) at the frame in a rotationally fixed manner.

18. The seat belt retractor according to claim 17, **characterized in that** the second force limiter includes a control means for controlling the pawl (60).

19. The seat belt retractor according to claim 18, **characterized in that** the control means is coupled to the blocking ring (18) and upon rotation of the blocking ring (18) connects the second force limiter.

20. The seat belt retractor according to any one of the claims 11 to 19, **characterized in that** the first force limiter and/or the second force limiter include(s) a deformable member (36).

21. The seat belt retractor according to claim 20, **characterized in that** the deformable member (36) is a torsion rod (52).

22. The seat belt retractor according to any one of the claims 11 to 21, **characterized in that** the first force limiter and/or the second force limiter include(s) a wire (42) as well as a forming element (44) capable of deforming the wire (42).

23. The seat belt retractor according to claim 22, **characterized in that** the forming element (44) includes a baffle (50) through which the wire (42) can be pulled.

24. The seat belt retractor according to any one of the claims 11 to 23, **characterized in that** the first force limiter and/or the second force limiter include(s) a cutting force limiter (38).

25. The seat belt retractor according to any one of the claims 11 to 24, **characterized in that** the first force limiter and/or the second force limiter include(s) an electromagnetic force limiter.

26. The seat belt retractor according to any one of the claims 12 to 25, **characterized in that** the first force limiter and/or the second force limiter include(s) a hydraulic, especially a hydrodynamic force limiter.

## Revendications

1. Enrouleur de ceinture (1) comportant un châssis (12), une partie bobine de ceinture (14) montée libre en rotation dans le châssis (12) et une partie doigt de blocage (22) prévue sur la bobine de ceinture (14) qui peut venir en prise dans une zone dentelée de blocage (20), laquelle zone dentelée de blocage (20) est prévue sur une bague de blocage (18), qui est limitée en rotation par fixation au châssis (12), **caractérisé en ce que** la bague de blocage (18) présente un filetage (26) et qu'elle est fixée sur le châssis (12) qui possède un taraudage (28) prévu à cet effet.

2. Enrouleur de ceinture selon la revendication 1, **caractérisé en ce que**, la zone dentelée de blocage (20) est prévue sur le côté intérieure (32) de la bague de blocage (18) et que le doigt de blocage (22) peut venir en prise dans la zone dentelée de blocage (20) par déplacement radial vers l'extérieur.

3. Enrouleur de ceinture selon la revendication 2, **caractérisé en ce que**, le filetage (26) est un filetage extérieur.

4. Enrouleur de ceinture selon l'une des revendications 2 ou 3, **caractérisé en ce que**, sur ou dans le filetage (26) est prévue une butée (34) qui permet d'arrêter la rotation de la bague de blocage (18).

5. Enrouleur de ceinture selon la revendication 4, **caractérisé en ce que** la butée (34) est une butée dont la surface s'étend radialement.

6. Enrouleur de ceinture selon la revendication 4, **caractérisé en ce que** la butée (34) est une butée faisant saillie axialement.

7. Enrouleur de ceinture selon l'une des revendications précédentes, **caractérisé en ce qu'**une bague d'arrêt (16) est prévue sur le châssis (12) et que la bague de blocage (18)est fixée à ou dans cette bague d'arrêt (16), où la bague d'arrêt (16) présente un taraudage (28).

8. Enrouleur de ceinture selon la revendication 7, **caractérisé en ce qu'**un dispositif de support amovible (33) est prévu entre la bague de blocage (18) et la bague d'arrêt (16).

9. Enrouleur de ceinture selon l'une des revendications précédentes, **caractérisé en ce qu'**un dispositif de support amovible (33) est prévu entre la bague de blocage (18) et le châssis (12).

10. Enrouleur de ceinture selon la revendication 8 ou 9, **caractérisé en ce qu'**un dispositif de support amovible (33) est formé par une goupille, en particulier une goupille de cisaillement.

11. Enrouleur de ceinture selon la revendication 8 ou 10, **caractérisé en ce qu'**un premier limiteur d'effort fonctionnel est prévu entre la bague de blocage (18) et la bague d'arrêt (16).

12. Enrouleur de ceinture selon la revendication 11, **caractérisé en ce que** le premier limiteur d'effort est en permanence sous tension.

13. Enrouleur de ceinture selon la revendication 11, **caractérisé en ce que** le premier limiteur d'effort est activable.

14. Enrouleur de ceinture selon l'une des revendications précédentes, **caractérisé en ce qu'**un second limiteur d'effort fonctionnel est prévu entre la bobine de ceinture (14) et le châssis (12).

15. Enrouleur de ceinture selon la revendication 14, **caractérisé en ce que** le second limiteur d'effort est en permanence sous tension.

16. Enrouleur de ceinture selon la revendication 15, **caractérisé en ce que** le second limiteur d'effort est activable.

17. Enrouleur de ceinture selon la revendication 16, **caractérisé en ce qu'**une roue à rochet (58) est pourvue d'une denture de blocage (59), qui peut être couplée au deuxième limiteur d'effort, dans laquelle un cliquet (60) monté sur le châssis peut se mettre en prise dans la denture de blocage (59) et peut bloquer en rotation la roue à rochet (58) sur le châssis (12).

18. Enrouleur de ceinture selon la revendication 17, **caractérisé en ce que** le second limiteur d'effort présente un guide, qui guide le cliquet (60).

19. Enrouleur de ceinture selon la revendication 18, **caractérisé en ce que** le guide est couplé avec la bague de blocage (18) et qui par rotation de la bague de blocage (18) active le deuxième limiteur d'effort.

20. Enrouleur de ceinture selon l'une des revendications 11 à 19, **caractérisé en ce que** le premier limiteur d'effort et/ou le deuxième limiteur d'effort présentent un élément déformable (36).

21. Enrouleur de ceinture selon la revendication 20, **caractérisé en ce que** l'élément déformable (36) est une barre de torsion (52).

22. Enrouleur de ceinture selon l'une des revendications 11 à 21, **caractérisé en ce que** le premier limiteur d'effort et/ou le deuxième limiteur d'effort présentent un fil (42) ainsi qu'un élément de déformation (44), que le fil (42) peut déformer.

23. Enrouleur de ceinture selon la revendication 22, **caractérisé en ce que** l'élément de déformation (44) présente une chicane (50), à travers laquelle le fil (42) peut être tiré.

24. Enrouleur de ceinture selon l'une des revendications 11 à 23, **caractérisé en ce que** le premier limiteur d'effort et/ou le deuxième limiteur d'effort présentent un limiteur d'effort usiné (38).

25. Enrouleur de ceinture selon l'une des revendications 11 à 24, **caractérisé en ce que** le premier limiteur d'effort et/ou le deuxième limiteur d'effort présentent un limiteur d'effort électromagnétique.

26. Enrouleur de ceinture selon l'une des revendications 12 à 25, **caractérisé en ce que** le premier limiteur d'effort et/ou le deuxième limiteur d'effort présentent un limiteur d'effort hydraulique, en particulier hydrodynamique.
